# FASCICULE DE BREVET EUROPEEN

(11) **EP 3 220 206 B1**
(45) Date de publication et mention de la délivrance du brevet: **30.09.2020**
(21) Numéro de dépôt: 16160743.7
(22) Date de dépôt: 16.03.2016
(51) Int. Cl.: G04B 5/24, G04B 1/20, F16D 3/04, F16D 43/202, F16H 1/32

(54) **DISPOSITIF HORLOGER DE TRANSMISSION**
ÜBERTRAGUNGSVORRICHTUNG FÜR UHR
CLOCK TRANSMISSION DEVICE

(43) Date de publication de la demande: 20.09.2017
(73) Titulaire: ROLEX SA, 1211 Genève 26 (CH)
(72) Inventeur: CALAME, Florian, 1066 Epalinges (CH); CATHELINE, Adrien, 74520 Valleiry (FR); PERSEGUERS, Sébastien, 1227 Carouge (CH)
(74) Mandataire: Moinas & Savoye SARL

(56) Documents cités:
- CH-A- 74 144
- CH-A- 408 785
- FR-A- 701 884
- FR-A- 857 402
- FR-A1- 2 550 839
- US-A- 964 180
- US-A- 3 472 097

## Description

L'invention concerne un dispositif de transmission, c'est-à-dire de transmission de mouvement ou d'énergie. Elle concerne aussi un mécanisme horloger comprenant un tel dispositif. Elle concerne encore un mouvement horloger comprenant un tel dispositif ou un tel mécanisme. Elle concerne également une pièce d'horlogerie, notamment une montre bracelet, comprenant un tel dispositif, un tel mécanisme ou un tel mouvement. L'invention concerne enfin un procédé de fonctionnement d'un tel dispositif de transmission, d'un tel mécanisme horloger, d'un tel mouvement horloger ou d'une telle pièce d'horlogerie et un procédé de modification d'une pièce d'horlogerie.

Les barillets d'horlogerie, en particulier les barillets pour pièces d'horlogerie à remontage automatique, sont communément associés à des dispositifs de limitation de couple afin d'obvier aux risques de surtension du ressort de barillet. Les dispositifs de limitation de couple connus de l'art antérieur proposent de mettre en oeuvre conventionnellement des systèmes de friction conformés pour empêcher exclusivement un armage supplémentaire du ressort de barillet au-delà d'un seuil de couple d'armage maximal. De tels systèmes de friction peuvent ainsi être très fréquemment sollicités, notamment lorsque le ressort de barillet est constamment armé par un mécanisme de remontage automatique, et risquent de ce fait d'être particulièrement sujets à l'usure.

On connaît de l'état de la technique deux familles de dispositifs de limitation de couple d'un barillet.

Selon la première famille de réalisations, le dispositif de limitation de couple consiste en un système de friction qui est mis en œuvre à l'extérieur du tambour de barillet. Un tel système est par exemple divulgué au sein du brevet CH160492 dans lequel un mobile de friction est disposé à l'interface d'une masse oscillante et d'un barillet, ou encore au sein du document CH146603 dans lequel la surtension du ressort de barillet est évitée par l'entremise d'un ressort de friction porté directement par le support de la masse oscillante. De telles constructions sont délicates à intégrer au sein du mouvement, et sont particulièrement sujettes à l'usure.

Selon la deuxième famille de réalisations, un dispositif de limitation de couple consiste en un système de friction qui est mis en œuvre au sein du tambour de barillet. Une solution, couramment adoptée de nos jours, consiste à accoupler à friction le ressort de barillet avec la paroi intérieure du tambour de barillet par l'intermédiaire d'une lame élastique communément appelée « bride glissante » qui est rapportée à l'extrémité extérieure du ressort de barillet. Selon l'état de la technique, la paroi intérieure du tambour peut comporter des surfaces de glissement et des découpes en forme d'encoches dans lesquelles la bride glissante est susceptible de venir buter de façon à générer des couples moteurs élevés au barillet. Une telle solution donne satisfaction dans la mesure où celle-ci permet d'obtenir de tels niveaux de couples au barillet tout en préservant l'intégrité du ressort de barillet. A l'instar des solutions précitées, la paroi interne du tambour de barillet peut toutefois être sujette à l'usure. La demande de brevet EP2420899 propose par exemple de tenter de remédier à ce problème par le biais d'une conformation particulière d'encoches de tambour de barillet.

Le document CH408785 divulgue un système dans lequel on évite la surtension du barillet grâce au fait que l'arbre du barillet peut tourner dans les deux sens.

Le but de l'invention est de fournir un dispositif de transmission permettant de remédier aux inconvénients mentionnés précédemment et d'améliorer les dispositifs de transmission connus de l'art antérieur. En particulier, l'invention propose un dispositif de transmission permettant de limiter les usures dues à des glissements dans un barillet ou dans une chaîne de transmission en amont du barillet.

Un dispositif de transmission selon l'invention est défini par la revendication 1.

Différents modes de réalisation du dispositif sont définis par les revendications dépendantes 2 à 7.

Un mécanisme selon l'invention est défini par la revendication 8.

Un mouvement selon l'invention est défini par la revendication 9.

Une pièce d'horlogerie selon l'invention est définie par la revendication 10.

Un procédé de fonctionnement selon l'invention est défini par la revendication 11.

Différents modes de réalisation du procédé sont définis par les revendications dépendantes 12 à 14.

Un procédé de modification d'une pièce d'horlogerie selon l'invention est défini par la revendication 15.

Les figures annexées représentent, à titre d'exemple, un mode de réalisation d'une pièce d'horlogerie intégrant un dispositif de transmission selon l'invention.
La figure 1 est un schéma d'un mode de réalisation d'une pièce d'horlogerie selon l'invention incluant un mode de réalisation d'un dispositif de transmission selon l'invention.
Les figures 2 à 6 illustrent le fonctionnement d'une première liaison mécanique du mode de réalisation du dispositif de transmission selon l'invention.
La figure 7 est une vue éclatée du mode de réalisation du dispositif de transmission selon l'invention.
Les figures 8 à 11 illustrent le fonctionnement d'une deuxième liaison mécanique du mode de réalisation du dispositif de transmission selon l'invention.
La figure 12 est un graphique représentant l'évolution du couple mécanique (C) disponible au niveau du barillet en fonction du nombre de tours (T) d'un rochet ou élément d'entrée.
La figure 13 est un ordinogramme représentant un mode d'exécution d'un procédé de fonctionnement d'une pièce d'horlogerie selon l'invention.

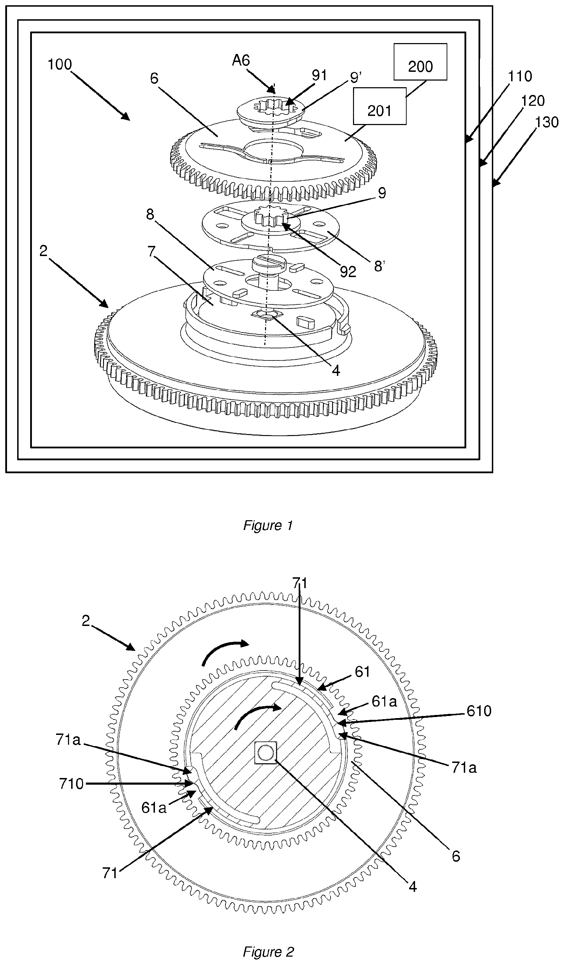

Un mode de réalisation d'une pièce d'horlogerie 130 est décrit ci-après en référence aux figures 1 à 11. La pièce d'horlogerie est par exemple une montre, en particulier une montre bracelet, notamment une montre bracelet automatique. La pièce d'horlogerie comprend un mouvement horloger 120, lui-même comprenant un mécanisme 110.

Le mécanisme comprend une source d'énergie 200, comme par exemple une masse oscillante ou une couronne de remontage, un barillet 2 et une chaîne de remontage 100, 201 reliant la source d'énergie au barillet 2. La chaîne de remontage comprend un dispositif 100 de transmission et un rouage 201 permettant de transmettre un mouvement au dispositif uniquement selon un premier sens.

Le dispositif 100 de transmission comprend :
- un élément d'entrée 6 destiné à être entraîné uniquement selon le premier sens,
- un élément de sortie 7,
- une première liaison mécanique 61a, 71a agencée de sorte que le mouvement de l'élément d'entrée selon un premier sens provoque le mouvement de l'élément de sortie selon un deuxième sens, et
- une deuxième liaison mécanique 9', 9, 90, 82', 62 agencée de sorte que le mouvement de l'élément d'entrée selon le premier sens provoque le mouvement de l'élément de sortie selon un troisième sens, le troisième sens étant opposé au deuxième sens.

L'élément d'entrée est par exemple un rochet 6. Avantageusement, l'élément d'entrée est pivoté autour d'un premier axe A6. Le rouage 201 relie mécaniquement l'élément d'entrée à la source d'énergie 200.

L'élément de sortie est par exemple un premier plateau 7. Avantageusement, l'élément de sortie est pivoté autour du premier axe A6 et/ou destiné à être solidaire en rotation d'un arbre 4 du barillet 2. Par exemple, l'élément de sortie est destiné à être monté à carré sur l'arbre 4. Une vis est prévue pour immobiliser l'élément de sortie sur l'arbre 4.

Dans le mode de réalisation représenté, les éléments d'entrée et de sortie sont pivotés autour du même axe A6 et les premier et deuxième sens sont confondus.

Le dispositif de transmission présente la particularité de combiner deux effets avantageux complémentaires. D'une part, ce dispositif permet d'éviter la surtension d'un ressort 3 de barillet lorsque celui-ci atteint un niveau d'armage approchant son seuil d'armage maximal et, d'autre part, ce même dispositif permet d'amoindrir, voire d'amoindrir significativement, le niveau d'armage du ressort et ainsi d'éloigner, voire d'éloigner significativement, le niveau d'armage du ressort de son seuil d'armage maximal. A cet effet, le dispositif comporte la première liaison mécanique permettant le débrayage du ressort de barillet et la deuxième liaison mécanique qui autorise un dévidement au moins partiel du ressort de barillet dès lors que le débrayage du ressort est effectif.

Une telle solution permet avantageusement de minimiser les sollicitations de friction, et ainsi de minimiser les risques d'usure, en particulier pour une pièce d'horlogerie automatique dotée d'un mécanisme d'armage dont la vitesse d'armage est optimisée. Par ailleurs, une telle solution permet de minimiser les perturbations du couple fourni par le barillet lorsque le ressort de barillet atteint son seuil d'armage maximal. Avantageusement encore, une telle solution permet d'optimiser le nombre de tours d'enroulement du ressort de barillet dans un volume de barillet donné, grâce au fait que le dispositif limitant le couple est disposé non pas au sein du tambour de barillet, mais à l'extérieur du barillet.

Le dispositif de transmission selon l'invention se distingue des réalisations connues de l'art antérieur par le fait que celui-ci comporte un système autorisant un désarmage du ressort de barillet dès lors que le ressort de barillet est débrayé de la source d'énergie 200 une fois que le ressort a atteint un seuil d'armage maximal prédéfini. Plus particulièrement, ce dispositif permet une rotation antagoniste de l'arbre 4 de barillet, à savoir une rotation de l'arbre de barillet dans un sens contraire à celui permettant l'armage du ressort de barillet, sous l'actionnement de la chaîne de remontage du barillet, notamment sous l'actionnement de l'élément d'entrée, permettant ainsi un dévidement au moins partiel du ressort de barillet lorsque ce dernier a atteint un seuil d'armage maximal prédéfini.

En particulier, le dispositif de transmission selon l'invention se distingue des réalisations connues de l'art antérieur par le fait que dans ces réalisations, aucun dispositif connexe n'est prévu pour réduire les sollicitations en cas d'armage complet du ressort de barillet, notamment aucun dispositif connexe n'est prévu pour réduire les frictions dues aux glissements et donc l'usure.

Pour atteindre ces buts, le dispositif de transmission comprend la première liaison mécanique qui autorise un débrayage des éléments d'entrée et de sortie et qui est couplée à la deuxième liaison mécanique autorisant un dévidement au moins partiel du ressort 3.

Avantageusement, le dispositif de transmission selon l'invention peut être disposé en lieu et place d'un rochet conventionnel d'un barillet d'horlogerie.

Dans une première configuration du dispositif de transmission, la chaîne de remontage arme le ressort 3 de barillet tant que le ressort 3 n'a pas atteint un seuil d'armage maximal prédéfini. Dans cette première configuration, la première liaison mécanique ne limite pas le couple transmis. Ainsi, l'arbre 4 de barillet est entraîné dans le deuxième sens de rotation de telle sorte que le ressort 3 puisse s'enrouler autour de la bonde de l'arbre de barillet. Ce sens de rotation coïncide avec le premier sens de rotation de l'élément d'entrée lorsque la chaîne de remontage est actionnée.

Une fois que le ressort 3 a atteint un seuil d'armage maximal prédéfini, soit un premier seuil de couple prédéfini, la première liaison mécanique permet de désaccoupler l'élément d'entrée 6 de l'élément de sortie et, donc de désaccoupler la source d'énergie 200 de l'arbre 4 de barillet. Dans cette deuxième configuration du dispositif de transmission, la rotation de l'élément d'entrée 6 induite par la source d'énergie n'entraîne plus la rotation de l'arbre 4 de barillet et n'agit donc plus sur le ressort 3.

Une fois l'arbre 4 désaccouplé de la source d'énergie, une rotation de l'élément d'entrée 6, induite par la source d'énergie, permet l'activation d'une deuxième liaison mécanique autorisant un dévidement au moins partiel du ressort 3. Dans cette troisième configuration du dispositif de transmission, l'arbre 4 de barillet est entraîné dans un troisième sens de rotation de telle sorte que le ressort 3 puisse se dévider autour de la bonde de l'arbre de barillet. Ce sens de rotation est contraire à celui du sens de rotation de l'élément d'entrée 6 lorsque la chaîne cinématique est actionnée.

Une fois le ressort 3 au moins partiellement dévidé, le dispositif 1 de transmission retrouve la première configuration dans laquelle la chaîne de remontage arme, sous l'effet de la source d'énergie, le ressort 3 de barillet tant que le ressort 3 n'a pas atteint le seuil de couple prédéfini.

De préférence, la première liaison mécanique comprend un ou plusieurs bras 71, notamment un ou plusieurs bras formés sur l'élément de sortie, et une ou plusieurs saillies 61a, notamment une ou plusieurs saillies formées sur l'élément d'entrée, les bras et les saillies coopérant par exemple par obstacle. Dans le mode de réalisation représenté, la première liaison mécanique comprend deux bras 71 formés sur l'élément de sortie 7 et deux saillies 61a formées sur l'élément d'entrée 6, les bras et les saillies coopérant par obstacle.

Le ou les bras 71 peuvent, par exemple, être venus de matière avec l'élément de sortie 7. Les extrémités 71a des bras sont avantageusement prévues pour coopérer avec les saillies 61a formées sur une paroi intérieure 61 de l'élément d'entrée.

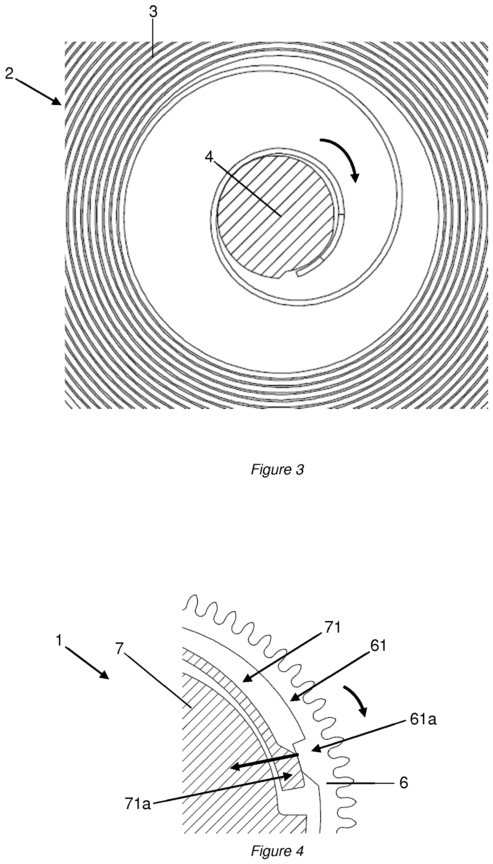

Ainsi, comme représenté sur les figures 2 et 3, lorsqu'il est mis en mouvement, l'élément d'entrée 6 entraîne l'arbre 4 de barillet par le biais de ses saillies 61a qui mènent chacune des extrémités 71a formées sur l'élément de sortie 7. En conséquence, l'arbre 4 de barillet est entraîné dans un sens de rotation de telle sorte que le ressort 3 puisse s'enrouler autour de la bonde de l'arbre 4 du barillet.

Avantageusement, la première liaison mécanique est de plus agencée de sorte qu'elle autorise un déplacement libre de l'élément d'entrée 6 relativement à l'élément de sortie 7lorsque l'intensité du couple mécanique exercé par l'élément d'entrée sur l'élément de sortie dépasse un seuil donné.

Dans ce but, par exemple,
- le ou les bras sont flexibles, et
- le ou les bras et/ou le ou les saillies présentent une ou des pentes 610, 710, et
- la ou les pentes sont agencées de sorte que le ou les bras flexibles fléchissent lorsque l'intensité du couple mécanique exercé par l'élément d'entrée sur l'élément de sortie dépasse le seuil donné.

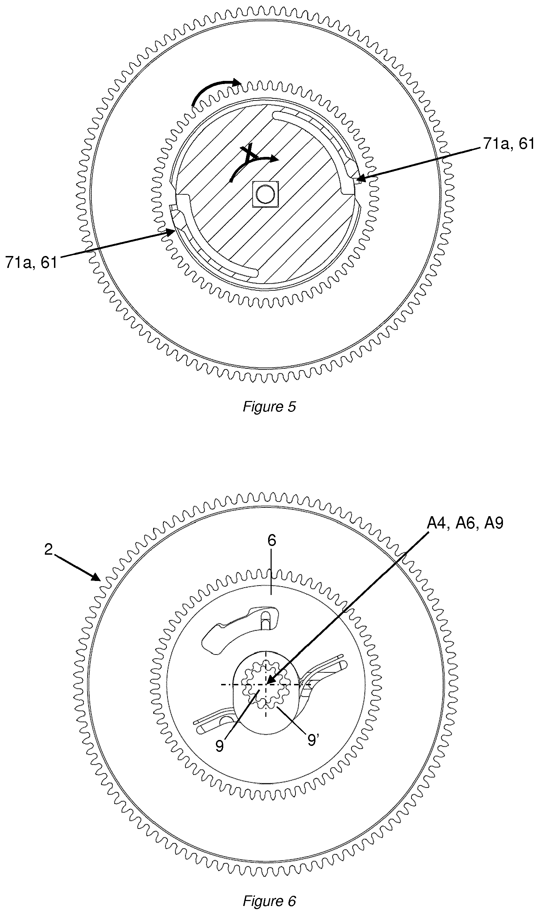

En effet, une fois que le ressort 3 est enroulé suffisamment pour que le seuil de couple soit atteint, c'est-à-dire lorsqu'un seuil d'armage prédéfini est atteint, les bras 71 fléchissent sous l'actionnement des saillies 61a de sorte à pouvoir s'escamoter comme représenté sur la figure 4, et ainsi permettre aux extrémités 71a de rompre le contact avec les saillies 61a de telle manière que la paroi intérieure 61 de l'élément d'entrée 6 puisse venir glisser à l'encontre des extrémités 71a des bras 71 comme représenté sur la figure 5. En effet, du fait des pentes 610 et/ou 710, l'action de l'élément d'entrée sur l'élément de sortie comprend des efforts qui peuvent être décomposés en :
- des efforts orthoradiaux (vis-à-vis de l'axe A6) générant un couple autour de l'axe A6, et
- des efforts radiaux (vis-à-vis de l'axe A6) provoquant la flexion des bras.

Ainsi, selon l'orientation des pentes et la rigidité des bras, un seuil maximal de couple mécanique transmissible est déterminé.

Une fois les bras suffisamment fléchis, l'élément de sortie 7, et par voie de conséquence l'arbre 4, sont ainsi désaccouplés de l'élément d'entrée 6. Dans cette deuxième configuration du dispositif de transmission représenté à la figure 5, la rotation de l'élément d'entrée induite par la chaîne de remontage n'entraîne plus la rotation de l'élément de sortie 7 ni celle de l'arbre 4 de barillet et n'agit donc plus sur le ressort 3.

Dès lors que l'élément d'entrée 6 et l'élément de sortie 7 sont désaccouplés, la deuxième liaison mécanique autorisant un dévidement partiel du ressort 3 peut être activée.

Comme représenté sur les figures 6 à 11, la deuxième liaison mécanique comprend avantageusement :
- un bâti 9' comprenant une première denture 91,
- une roue 9 comprenant une deuxième denture 92 destinée à engrener avec la première denture,
- un joint d'Oldham 90 liant mécaniquement la roue 9 et l'élément de sortie 7,
- un profil de came 84' et
- un doigt 62.

Par exemple, la roue 9 est solidaire en rotation de l'élément de sortie 7 via le joint d'Oldham. La roue 9 présente un axe de rotation A9 déplaçable dans un plan perpendiculaire à l'axe A4 de rotation de l'arbre 4 de barillet et relativement à l'axe A4 de telle façon que, dans la troisième configuration du dispositif de transmission, la roue 9 puisse engrener avec une denture intérieure d'une couronne formée sur le bâti du mouvement 9' ou fixée sur le bâti du mouvement.

Dans le mode de réalisation illustré par les figures, l'axe A4 de rotation de l'arbre 4 de barillet est confondu avec le premier axe A6.

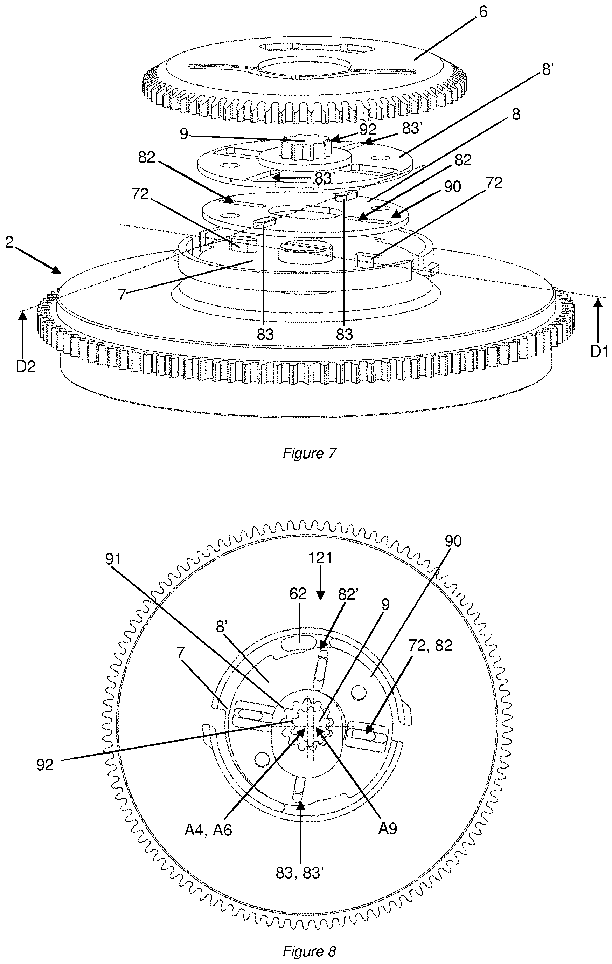

Le joint d'Oldham comprend l'élément de sortie 7, un deuxième plateau 8 et un troisième plateau 8' sur lequel est fixé la roue 9. Les premier et deuxième plateaux sont déplaçables dans le plan perpendiculaire à l'axe A4 relativement à l'élément de sortie 7. A cet effet, le deuxième plateau 8 est monté mobile en translation, selon une première glissière de direction D1, sur l'élément de sortie 7. La première glissière est par exemple réalisée grâce à des découpes oblongues 82 sur le deuxième plateau 8 coopérant avec des ergots 72 prévus sur l'élément de sortie, les ergots étant par exemple prévus pour venir se loger dans les découpes, comme représenté sur la figure 7. Le troisième plateau 8' est également monté mobile en translation, selon une deuxième glissière de direction D2, sur le deuxième plateau. La deuxième glissière est par exemple réalisée grâce à des découpes oblongues 83' sur le troisième plateau 8' coopérant avec des ergots 83 prévus sur le deuxième plateau 8, les ergots étant par exemple prévus pour venir se loger dans les découpes, comme représenté sur la figure 7. Les directions D1 et D2 sont de préférence orthogonales. Ainsi, le plateau 8', et donc la roue 9, sont déplaçables dans le plan perpendiculaire à l'axe A4 relativement à l'élément de sortie 7 et à l'arbre 4 de telle façon que la roue 9 puisse venir en prise avec le bâti 9'.

Dans les première et deuxième configurations, l'axe de rotation A9 de la roue 9 coïncide avec l'axe A4 de rotation de l'arbre 4 de barillet, l'axe A4 coïncidant également avec l'axe A6 de rotation de l'élément d'entrée 6 comme représenté sur la figure 6. Ainsi, la roue 9 pivote concentriquement à l'arbre de barillet 4 et la deuxième denture 92 de la roue 9 est hors de portée de la première denture 91 du bâti 9'.

Le dispositif de transmission comprend encore un mécanisme 121 d'activation/ de désactivation de la deuxième liaison mécanique. Ce mécanisme d'activation/ de désactivation permet de commander l'excentration de la roue 9 relativement à l'axe A4. Les déplacements dans le plan du plateau 8' sont provoqués par le doigt d'actionnement 62 faisant partie du mécanisme 121 d'activation/ de désactivation. Ce doigt est par exemple venu de matière avec l'élément d'entrée 6.

La figure 8 illustre le dispositif de transmission dans une phase transitoire. Cette phase transitoire peut coïncider avec la deuxième configuration décrite précédemment. On remarque que le doigt 62 est prévu pour coopérer avec au moins une surface de came 84' du plateau 8' de façon à faire déplacer l'axe de rotation A9 de la roue 9 relativement aux axes de rotation A4, A6, de l'arbre 4 et de l'élément d'entrée 6, et ainsi permettre l'engrènement de la roue 9 avec le bâti 9'. A cet effet, la surface de came 84' est excentrée relativement aux axes A4, A6. De préférence, la surface de came 84' est réalisée par un bord extérieur du troisième plateau 8'.

Les dentures respectives 92, 91 de la roue 9 et du bâti 9' sont ici conformées pour permettre un engrènement adéquat de la roue 9 et du bâti 9', et ce indépendamment de la position angulaire de la denture 92 de la roue 9 relativement à la denture 91 du bâti 9' lors du déclenchement de l'action du mécanisme 121, à savoir lors du déplacement des plateaux 8, 8' et de la roue 9 relativement au bâti 9'.

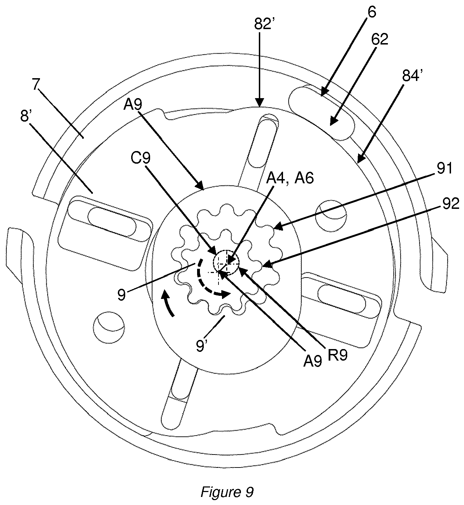

Une fois les dentures respectives de la roue 9 et du bâti 9' engrenées, celles-ci sont maintenues en prise sous l'effet de la coopération du doigt 62 de élément d'entrée 6 et de la surface de came 84' définissant une circonférence extérieure du plateau 8'. Le doigt 62 et la surface de came 84' sont conformés et agencés pour définir la position de l'axe A9 de la roue 9 sur un seul et même cercle C9 de rayon R9 centré sur les axes coïncidant A4 et A6 comme représenté sur la figure 9. Ainsi, la roue 9 peut décrire une trajectoire hypocycloïdale relativement au bâti 9' sous l'effet de la rotation de l'élément d'entrée 6.

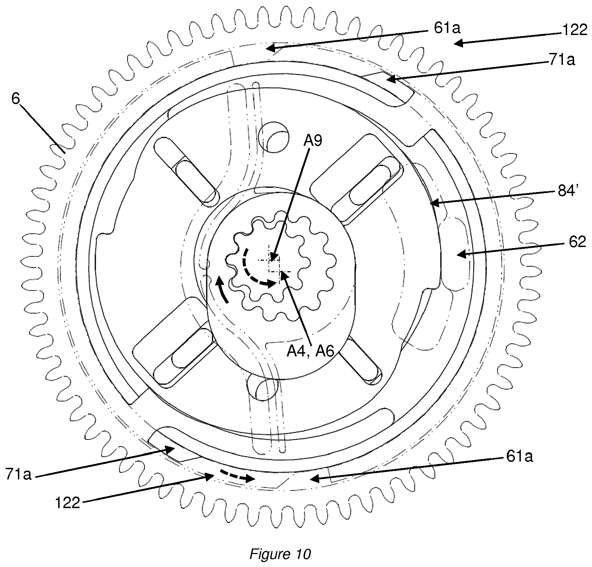

Dans cette troisième configuration, l'arbre 4 de barillet est maintenu dans une position angulaire donnée par le blocage de la denture 92 de la roue 9 au sein de la denture 91 du bâti 9'. Ces dentures peuvent se substituer à un cliquet nécessairement utilisé dans un système conventionnel de barillet. Une rotation de l'élément d'entrée 6 et du doigt 62, sous l'effet de la chaîne de remontage, induit, quant à elle, le déplacement de la roue 9 sous l'effet du déplacement excentrique du plateau 8' relativement aux axes A4, A6, notamment le déplacement de l'axe A9 de la roue 9 le long de la circonférence du cercle C9. Lors du déplacement de la roue 9, la coopération par engrènement des première et deuxième dentures 91 et 92 de la roue 9 et du bâti 9' induit une rotation antagoniste de l'arbre 4, à savoir une rotation de l'arbre 4 de barillet dans un sens contraire à celui de l'élément d'entrée 6. Il s'ensuit un dévidement du ressort 3 comme représenté sur la figure 10.

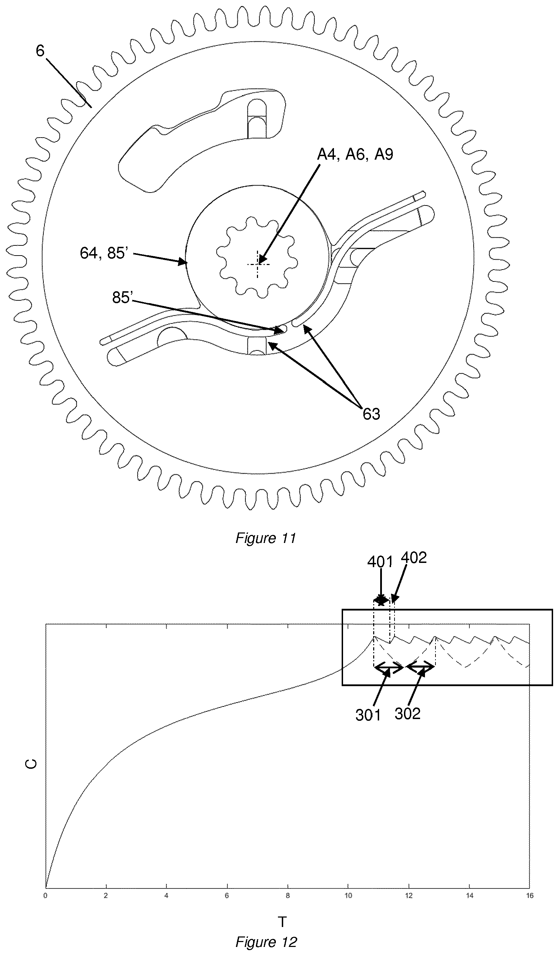

Le plateau 8', en particulier la surface de came 84' formant le pourtour du plateau 8', est rappelé contre le doigt 62 par un ressort 63 comme représenté sur la figure 11. Ce ressort est par exemple réalisé par deux lames flexibles 63 agissant par contact sur une portée 85' cylindrique de révolution et coaxiale à la roue 9 comme représenté sur la figure 11. Le ressort 63 rappelle ainsi en position de repos la roue 9, la position de repos étant une position dans laquelle les première et deuxième dentures ne sont pas engrenées.

La vitesse de dévidement du ressort 3 est ici contrôlée par le nombrage des dentures des première et deuxième dentures 91 et 92 de la roue 9 et du bâti 9'.

Avantageusement, la deuxième liaison mécanique est agencée de sorte qu'elle autorise un déplacement libre de l'élément de sortie relativement à l'élément d'entrée lorsque l'élément d'entrée a effectué un déplacement d'amplitude déterminée relativement au bâti 9'. Dans le mode de réalisation représenté, la deuxième liaison mécanique est agencée de sorte qu'elle autorise un déplacement libre de l'élément de sortie relativement à l'élément d'entrée lorsque l'élément d'entrée a effectué un déplacement d'environ un demi-tour relativement au bâti 9'.

Le dévidement du ressort 3 peut être arrêté par le biais également du mécanisme 121. La rotation antagoniste de l'arbre 4 peut par exemple être stoppée dès lors que le doigt 62 de l'élément d'entrée se positionne en regard d'un creux 82' prévu sur la surface de came 84' du plateau 8'. Ainsi, l'amplitude angulaire de la rotation antagoniste de l'arbre 4 est donnée par l'étendue d'une portion angulaire de la surface de came 84' définissant une circonférence extérieure du plateau 8'. Dans le mode de réalisation représenté, cette étendue angulaire est de l'ordre de 150°, et autorise ainsi une rotation antagoniste de l'arbre 4 de barillet de l'ordre de 150°. Bien entendu, il est possible d'étendre cette valeur à environ 200°, voire 300°, voire 350°, notamment lorsque le plateau 8' est pourvu d'un seul et unique creux sur la surface de came, et lorsque l'élément d'entrée 6 et l'élément de sortie 7 sont pourvus respectivement d'une seule et unique saillie 61a et une seule et unique extrémité 71a de bras. Ce dernier déplacement pourrait encore être d'environ un tiers de tour. Dans cette dernière hypothèse, la première liaison comprendrait de préférence trois bras 71 coopérant avec trois saillies 61a.

Le mécanisme 121 comprend, outre le doigt 62, la surface de came 84', le ressort 63, une surface de centrage 64 prévue sur l'élément d'entrée et une surface de centrage 85' du plateau 8'. Le tout est agencé de sorte que la surface 85' puisse être maintenue à l'encontre de la surface 64 de centrage de façon à repositionner le roue 9 coaxialement à l'élément d'entrée 6 lorsque le ressort est suffisamment dévidé. Une fois la surface 85' recentrée contre la surface 64, les première et deuxième dentures sont hors de portée. Dès lors que les extrémités 71a de l'élément de sortie 7 se retrouvent en butée à l'encontre des saillies 61 de l'élément d'entrée 6, le dispositif de transmission se trouve ainsi à nouveau dans la première configuration telle qu'illustrée par la figure 2. Avantageusement, les extrémités 71a de l'élément de sortie 7 peuvent se trouver en butée à l'encontre des saillies 61 de l'élément d'entrée 6 dès lors que le doigt 62 de l'élément d'entrée est positionné en regard d'un creux 82' de la surface de came 84' du plateau 8'.

Dans le mode de réalisation représenté, la deuxième liaison peut être activée dès lors que la première liaison n'est plus active. Plus particulièrement, la deuxième liaison peut être activée alors que la première liaison n'est plus active. Ainsi, les deuxième et troisième configurations du dispositif de transmisson peuvent coïncider. De préférence, la première liaison est réactivée après que la deuxième liaison ait été désactivée.

Dans tout ce document, une liaison mécanique entre deux éléments est dite active lorsqu'elle lie cinématiquement, notamment en rotation, ces deux éléments.

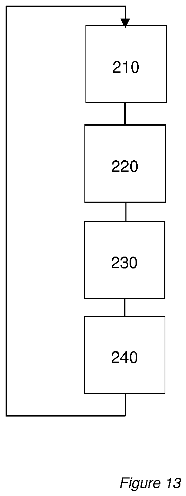

Un mode d'exécution d'un procédé de fonctionnement d'un dispositif de transmission ou d'un mécanisme horloger ou d'un mouvement horloger ou d'une pièce d'horlogerie selon l'invention est décrit ci-après en référence à la figure 13. Le procédé comprend au moins une itération des étapes ci-dessous :
- Une première étape 210 qui consiste à faire coopérer, notamment à lier les éléments d'entrée et de sortie 6, 7 par une première liaison mécanique 61a, 71a de sorte que le mouvement de l'élément d'entrée selon un premier sens provoque le mouvement de l'élément de sortie selon un deuxième sens,
- Une deuxième étape 220 qui consiste à débrayer les éléments d'entrée et de sortie,
- Une troisième étape 230 qui consiste à faire coopérer, notamment à lier les éléments d'entrée et de sortie par une deuxième liaison mécanique 9', 9, 90, 82', 62 de sorte que le mouvement de l'élément d'entrée selon le premier sens provoque le mouvement de l'élément de sortie selon un troisième sens, le troisième sens étant opposé au deuxième sens,
- Une quatrième étape 240 qui consiste à débrayer les éléments d'entrée et de sortie.

Avantageusement, les étapes 210 à 240 sont mises en œuvre dans l'ordre indiqué ci-dessus.

Avantageusement, l'étape 210 (et les étapes suivantes 220 à 240) sont réitérées suite à l'étape 240.

Le premier débrayage est réalisé lorsque l'intensité d'un couple mécanique exercé par l'élément d'entrée sur l'élément de sortie dépasse un seuil donné. Ce premier débrayage est une désactivation de la première liaison mécanique. Avantageusement, la coopération des éléments d'entrée et de sortie 6, 7 selon la première liaison mécanique consiste à solidariser les éléments, soit à lier les éléments de sorte que tout mouvement de l'un implique le même mouvement de l'autre.

Le deuxième débrayage est réalisé lorsque l'élément d'entrée a effectué un déplacement d'amplitude déterminée relativement à un bâti une fois les éléments d'entrée et de sortie liés par la deuxième liaison mécanique, notamment un demi-tour de l'élément d'entrée. Ce deuxième débrayage est une désactivation de la deuxième liaison mécanique. Avantageusement, la coopération des éléments d'entrée et de sortie 6, 7 selon la deuxième liaison mécanique consiste à lier les éléments de sorte que tout premier mouvement de l'un implique un deuxième mouvement de l'autre, les premier et deuxième mouvements étant différents.

De préférence, comme vu précédemment, les première et deuxième liaisons mécaniques sont activées exclusivement l'une de l'autre. Autrement dit, lorsque la première liaison mécanique est opérante, la deuxième liaison mécanique est inopérante, et réciproquement.

Un mode d'exécution d'un procédé de modification d'une pièce d'horlogerie ou d'un procédé de rhabillage d'une pièce d'horlogerie est décrit ci-après.

Le procédé comprend une étape de dépose d'un rochet de barillet et une étape de montage d'un dispositif de transmission décrit précédemment en lieu et place du rochet de barillet. Avantageusement, le procédé comprend une étape de solidarisation d'un organe 9' comprenant la première denture 91 à un bâti du mouvement de la pièce d'horlogerie.

Un tel dispositif de transmission permet de réaliser une limitation du couple soumis au barillet. La limitation de couple permet d'amoindrir les sollicitations des éléments de la première liaison mécanique grâce à la deuxième liaison mécanique, un dévidement partiel du ressort 3 permettant de rétablir un niveau de couple éloigné ou sensiblement éloigné du seuil maximal d'armage du barillet tout en satisfaisant parfaitement au bon comportement chronométrique de la pièce d'horlogerie. Un tel dispositif permet, par conséquent, de réduire considérablement les variations de couple fournies par le barillet lorsque le ressort de barillet a atteint un seuil d'armage maximal, et donc de minimiser les variations de couple à l'oscillateur en regard des solutions connues de l'art antérieur.

La figure 12 illustre deux courbes d'armage pour deux dispositifs de transmission distincts. Le nombrage z9', z9 des première et deuxième dentures respectives du bâti 9' et de la roue 9 permet d'ajuster la plage angulaire parcourue par la rotation antagoniste de l'arbre 4 en fonction de la plage angulaire parcourue par l'élément d'entrée 6 une fois le dispositif 1 dans sa troisième configuration. Les courbes représentent le couple C en fonction du déplacement T de l'élément d'entrée.

Dans un premier cas de figure illustré par la courbe en trait plein, le rapport z9/z9' est inférieur à deux. Une fois que le ressort a atteint le seuil d'armage maximal, on remarque que la plage angulaire parcourue par la rotation antagoniste de l'arbre 4 est inférieure à la plage angulaire parcourue par l'élément d'entrée 6. Cela se traduit par le fait qu'en phase 401 de désarmage du ressort, la valeur absolue de la pente d'une fonction affine assimilable à la courbe « de désarmage » est inférieure à celle d'une fonction affine assimilable à la courbe « d'armage » lorsque le dispositif se trouve à nouveau dans sa première configuration dans une phase d'armage 402.

Dans un deuxième cas de figure illustré par la courbe en traitillé, le rapport z9/z9' est égal à deux. Une fois que le ressort a atteint le seuil d'armage maximal, on remarque que la plage angulaire parcourue par la rotation antagoniste de l'arbre 4 est égale à la plage angulaire parcourue par l'élément d'entrée 6. Cela se traduit par le fait qu'en phase 301 de désarmage du ressort, la valeur absolue de la pente d'une fonction affine assimilable à la courbe « de désarmage » est égale à celle de la fonction affine correspondant à la courbe « d'armage » lorsque le dispositif se trouve à nouveau dans sa première configuration dans une phase d'armage 302. Autrement dit, dans le deuxième cas de figure, les courbes de désarmage et d'armage sont symétriques.

Dans un troisième cas de figure, non représenté, le rapport z9/z9' peut aussi être supérieur à deux. Dans ce cas de figure, la plage angulaire parcourue par la rotation antagoniste de l'arbre 4 est supérieure à la plage angulaire parcourue par l'élément d'entrée 6. Avantageusement, une telle configuration permet tout particulièrement de diminuer le nombre de sollicitations des éléments de la première liaison mécanique.

Un autre avantage du dispositif selon l'invention provient du fait que les éléments permettant la limitation de couple ne sont pas intégrés au sein du barillet, il est donc possible d'optimiser la géométrie du tambour de barillet de façon à permettre un enroulement supplémentaire du ressort de barillet, et ainsi permettre un gain en autonomie de la pièce d'horlogerie dotée d'un tel barillet.

Dans le mode de réalisation représenté, le dispositif de transmission est disposé en lieu et place d'un rochet conventionnel d'un barillet. Bien entendu, il est possible de disposer différemment ce dispositif au sein de la chaîne de remontage, manuelle ou automatique, du barillet et/ou de le faire coopérer avec un rochet conventionnel.

Un tel dispositif de transmission est aussi bien prévu pour coopérer avec un barillet d'une chaîne de finissage d'un mouvement horloger, qu'un barillet intégré au sein d'un mécanisme horloger, par exemple un mécanisme de sonnerie, notamment un mécanisme de réveil.

## Revendications

1. Dispositif (100) de transmission pour une chaîne de remontage (100, 201) d'un mouvement horloger (120), comprenant :
- un élément d'entrée (6) destiné à être entraîné uniquement selon un premier sens,
- un élément de sortie (7),
- une première liaison mécanique (61a, 71a) agencée de sorte que le mouvement de l'élément d'entrée selon un premier sens provoque le mouvement de l'élément de sortie selon un deuxième sens, et
- une deuxième liaison mécanique (9', 9, 90, 82', 84', 62) agencée de sorte que le mouvement de l'élément d'entrée selon le premier sens provoque le mouvement de l'élément de sortie selon un troisième sens, le troisième sens étant opposé au deuxième sens.

2. Dispositif de transmission selon la revendication précédente, **caractérisé en ce que** l'élément d'entrée est un rochet (6), notamment un rochet pivoté autour d'un premier axe (A6), et/ou **en ce que** l'élément de sortie est un plateau (7), notamment un plateau pivoté autour d'un premier axe (A6) et/ou destiné à être solidaire en rotation d'un arbre de barillet (4).

3. Dispositif de transmission selon l'une des revendications précédentes, **caractérisé en ce que** la première liaison mécanique est agencée de sorte qu'elle autorise un déplacement libre de l'élément d'entrée relativement à l'élément de sortie lorsque l'intensité d'un couple mécanique exercé par l'élément d'entrée sur l'élément de sortie dépasse un seuil donné et/ou **en ce que** la première liaison mécanique comprend un ou plusieurs bras (71a), notamment un ou plusieurs bras formés sur l'élément de sortie, et une ou plusieurs saillies (61a), notamment une ou plusieurs saillies formées sur l'élément d'entrée, les bras et les saillies coopérant par obstacle.

4. Dispositif de transmission selon la revendication 3, **caractérisé en ce que** :
- le ou les bras sont flexibles, et
- le ou les bras et/ou le ou les saillies présentent une ou des pentes (610, 710), et
- la ou les pentes sont agencées de sorte que le ou les bras flexibles fléchissent lorsque l'intensité du couple mécanique exercé par l'élément d'entrée sur l'élément de sortie dépasse le seuil donné.

5. Dispositif de transmission selon l'une des revendications précédentes, **caractérisé en ce que** la deuxième liaison mécanique est agencée de sorte qu'elle autorise un déplacement libre de l'élément de sortie relativement à l'élément d'entrée lorsque l'élément d'entrée a effectué un déplacement d'amplitude déterminée relativement à un bâti (9'), notamment une rotation d'environ un demi-tour.

6. Dispositif de transmission selon l'une des revendications précédentes, **caractérisé en ce que** la deuxième liaison mécanique comprend :
- un bâti (9') comprenant une première denture (91),
- une roue (9) comprenant une deuxième denture (92) destinée à engrener avec la première denture,
- un joint d'Oldham (90) liant mécaniquement la roue (9) et l'élément de sortie,
- un profil de came (84') et
- un doigt (62).

7. Dispositif de transmission selon l'une des revendications précédentes, **caractérisé en ce que** le dispositif comprend un ressort (63) de rappel en position de repos d'une roue (9), la position de repos étant une position dans laquelle une première denture (91) du bâti et une deuxième denture (92) de la roue (9) ne sont pas engrenées, en particulier une position dans laquelle la roue (9) est disposée concentriquement à l'axe (A6), et/ou **en ce que** le premier sens et le deuxième sens sont confondus.

8. Mécanisme (110) de remontage d'un mouvement (120) horloger, comprenant un barillet (2) et une chaîne de remontage (201, 100), la chaîne de remontage comprenant un dispositif (100) de transmission selon l'une des revendications précédentes, le mécanisme comprenant une source d'énergie (200), par exemple une masse oscillante (200).

9. Mouvement horloger (120) comprenant un dispositif (100) selon l'une des revendications 1 à 7 et/ou un mécanisme (110) selon la revendication précédente.

10. Pièce d'horlogerie (130), en particulier montre bracelet automatique, comprenant un dispositif (100) selon l'une des revendications 1 à 7 et/ou un mécanisme (110) selon la revendication 8 et/ou un mouvement horloger (120) selon la revendication précédente.

11. Procédé de fonctionnement d'un dispositif de transmission selon l'une des revendications 1 à 7 ou d'un mécanisme horloger selon la revendication 8 ou d'un mouvement horloger selon la revendication 9 ou d'une pièce d'horlogerie selon la revendication 10, comprenant au moins une itération des étapes ci-dessous :
- Coopération des éléments d'entrée et de sortie (6, 7) par une première liaison mécanique (61a, 71a) de sorte que le mouvement de l'élément d'entrée selon un premier sens provoque le mouvement de l'élément de sortie selon un deuxième sens,
- Premier débrayage des éléments d'entrée et de sortie,
- Coopération des éléments d'entrée et de sortie par une deuxième liaison mécanique (9', 9, 90, 82', 84', 62) de sorte que le mouvement de l'élément d'entrée selon le premier sens provoque le mouvement de l'élément de sortie selon un troisième sens, le troisième sens étant opposé au deuxième sens,
- Deuxième débrayage des éléments d'entrée et de sortie.

12. Procédé de fonctionnement selon la revendication précédente, **caractérisé en ce que** le premier débrayage est réalisé lorsque l'intensité d'un couple mécanique exercé par l'élément d'entrée sur l'élément de sortie dépasse un seuil donné.

13. Procédé de fonctionnement selon la revendication 11 ou 12, **caractérisé en ce que** le deuxième débrayage est réalisé lorsque l'élément d'entrée a effectué un déplacement d'amplitude déterminée relativement à un bâti lors de la coopération des éléments d'entrée et de sortie par la deuxième liaison mécanique, notamment environ un demi-tour.

14. Procédé de fonctionnement selon l'une des revendications 11 à 13, **caractérisé en ce que** les première et deuxième liaisons mécaniques sont activées exclusivement l'une de l'autre.

15. Procédé de modification d'une pièce d'horlogerie ou procédé de rhabillage d'une pièce d'horlogerie, comprenant une étape de dépose d'un rochet de barillet et une étape de montage d'un dispositif de transmission selon l'une des revendication 1 à 7 en lieu et place du rochet de barillet déposé.

## Patentansprüche

1. Übertragungsvorrichtung (100) für eine Aufzugskette (100, 201) eines Uhrwerks (120), welche umfasst:
- ein Eingangselement (6), das dazu bestimmt ist, ausschließlich in einer ersten Richtung angetrieben zu werden,
- ein Ausgangselement (7),
- eine erste mechanische Verbindung (61a, 71a), die so gestaltet ist, dass die Bewegung des Eingangselements in einer ersten Richtung die Bewegung des Ausgangselements in einer zweiten Richtung hervorruft, und
- eine zweite mechanische Verbindung (9', 9, 90, 82', 84', 62), die so gestaltet ist, dass die Bewegung des Eingangselements in der ersten Richtung die Bewegung des Ausgangselements in einer dritten Richtung hervorruft, wobei die dritte Richtung zur zweiten Richtung entgegengesetzt ist.

2. Übertragungsvorrichtung nach dem vorhergehenden Anspruch, **dadurch gekennzeichnet, dass** das Eingangselement ein Sperrrad (6) ist, insbesondere ein Sperrrad, das um eine erste Achse (A6) drehbar ist, und/oder dadurch, dass das Ausgangselement eine Platte (7) ist, insbesondere eine Platte, die um eine erste Achse (A6) drehbar ist und/oder dazu bestimmt ist, mit einer Federhauswelle (4) drehfest verbunden zu sein.

3. Übertragungsvorrichtung nach einem der vorhergehenden Ansprüche, **dadurch gekennzeichnet, dass** die erste mechanische Verbindung so gestaltet ist, dass sie eine freie Bewegung des Eingangselements relativ zum Ausgangselement ermöglicht, wenn die Größe eines mechanischen Drehmoments, das von dem Eingangselement auf das Ausgangselement ausgeübt wird, einen gegebenen Schwellenwert überschreitet, und/oder dadurch, dass die erste mechanische Verbindung einen oder mehrere Arme (71a), insbesondere einen oder mehrere am Ausgangselement ausgebildete Arme, und einen oder mehrere Vorsprünge (61a), insbesondere einen oder mehrere am Eingangselement ausgebildete Vorsprünge, umfasst, wobei die Arme und die Vorsprünge formschlüssig zusammenwirken.

4. Übertragungsvorrichtung nach Anspruch 3, **dadurch gekennzeichnet, dass**:
- der oder die Arme flexibel sind, und
- der oder die Arme und/oder der oder die Vorsprünge eine oder mehrere Schrägen (610, 710) aufweisen, und
- die Schräge oder die Schrägen so gestaltet sind, dass der oder die flexiblen Arme sich biegen, wenn die Größe des mechanischen Drehmoments, das von dem Eingangselement auf das Ausgangselement ausgeübt wird, den gegebenen Schwellenwert überschreitet.

5. Übertragungsvorrichtung nach einem der vorhergehenden Ansprüche, **dadurch gekennzeichnet, dass** die zweite mechanische Verbindung so gestaltet ist, dass sie eine freie Bewegung des Ausgangselements relativ zum Eingangselement ermöglicht, wenn das Eingangselement eine Bewegung mit einer bestimmten Amplitude relativ zu einem Gestell (9') ausgeführt hat, insbesondere eine Drehung um ungefähr eine halbe Umdrehung.

6. Übertragungsvorrichtung nach einem der vorhergehenden Ansprüche, **dadurch gekennzeichnet, dass** die zweite mechanische Verbindung umfasst:
- ein Gestell (9'), das eine erste Zahnung (91) umfasst,
- ein Rad (9), das eine zweite Zahnung (92) umfasst, die dazu bestimmt ist, mit der ersten Zahnung zu kämmen,
- eine Kreuzscheibenkupplung (90), die das Rad (9) und das Ausgangselement mechanisch verbindet,
- eine Kurvenscheibe (84') und
- einen Finger (62).

7. Übertragungsvorrichtung nach einem der vorhergehenden Ansprüche, **dadurch gekennzeichnet, dass** die Vorrichtung eine Feder (63) zur Rückholung eines Rades (9) in eine Ruheposition umfasst, wobei die Ruheposition eine Position ist, in welcher eine erste Zahnung (91) des Gestells und eine zweite Zahnung (92) des Rades (9) nicht in Eingriff stehen, insbesondere eine Position, in welcher das Rad (9) konzentrisch zur Achse (A6) angeordnet ist, und/oder dadurch, dass die erste Richtung und die zweite Richtung zusammenfallen.

8. Aufzugsmechanismus (110) eines Uhrwerks (120), welcher ein Federhaus (2) und eine Aufzugskette (201, 100) umfasst, wobei die Aufzugskette eine Übertragungsvorrichtung (100) nach einem der vorhergehenden Ansprüche umfasst, wobei der Mechanismus eine Energiequelle (200) umfasst, zum Beispiel eine Schwungmasse (200).

9. Uhrwerk (120), welches eine Vorrichtung (100) nach einem der Ansprüche 1 bis 7 und/oder einen Mechanismus (110) nach dem vorhergehenden Anspruch umfasst.

10. Uhr (130), insbesondere automatische Armbanduhr, welche eine Vorrichtung (100) nach einem der Ansprüche 1 bis 7 und/oder einen Mechanismus (110) nach Anspruch 8 und/oder ein Uhrwerk (120) nach dem vorhergehenden Anspruch umfasst.

11. Verfahren zum Betrieb einer Übertragungsvorrichtung nach einem der Ansprüche 1 bis 7 oder eines Uhrenmechanismus nach Anspruch 8 oder eines Uhrwerks nach Anspruch 9 oder einer Uhr nach Anspruch 10, welches wenigstens eine Iteration der nachfolgenden Schritte umfasst:
- Zusammenwirken des Eingangs- und des Ausgangselements (6, 7) durch eine erste mechanische Verbindung (61a, 71a), derart, dass die Bewegung des Eingangselements in einer ersten Richtung die Bewegung des Ausgangselements in einer zweiten Richtung hervorruft,
- erstes Auskuppeln des Eingangs- und des Ausgangselements,
- Zusammenwirken des Eingangs- und des Ausgangselements durch eine zweite mechanische Verbindung (9', 9, 90, 82', 84', 62), derart, dass die Bewegung des Eingangselements in der ersten Richtung die Bewegung des Ausgangselements in einer dritten Richtung hervorruft, wobei die dritte Richtung zur zweiten Richtung entgegengesetzt ist,
- zweites Auskuppeln des Eingangs- und des Ausgangselements.

12. Betriebsverfahren nach dem vorhergehenden Anspruch, **dadurch gekennzeichnet, dass** das erste Auskuppeln durchgeführt wird, wenn die Größe eines mechanischen Drehmoments, das von dem Eingangselement auf das Ausgangselement ausgeübt wird, einen gegebenen Schwellenwert überschreitet.

13. Betriebsverfahren nach Anspruch 11 oder 12, **dadurch gekennzeichnet, dass** das zweite Auskuppeln durchgeführt wird, wenn beim Zusammenwirken des Eingangs- und des Ausgangselements durch die zweite mechanische Verbindung das Eingangselement eine Bewegung mit einer bestimmten Amplitude relativ zu einem Gestell ausgeführt hat, insbesondere ungefähr eine halbe Umdrehung.

14. Betriebsverfahren nach einem der Ansprüche 11 bis 13, **dadurch gekennzeichnet, dass** die erste und die zweite mechanische Verbindung ausschließlich voneinander aktiviert werden.

15. Verfahren zur Änderung einer Uhr oder Verfahren zur Reparatur einer Uhr, welches einen Schritt des Ausbaus eines Sperrrades eines Federhauses und einen Schritt des Einbaus einer Übertragungsvorrichtung nach einem der Ansprüche 1 bis 7 anstelle des ausgebauten Federhaus-Sperrrades umfasst.

## Claims

1. A transmission device (100) for a winding train (100, 201) of a watch movement (120), comprising:
- an input element (6) intended to be driven only in a first direction,
- an output element (7),
- a first mechanical connection (61a, 71a) arranged such that the displacement of the input element in a first direction causes the displacement of the output element in a second direction, and
- a second mechanical connection (9', 9, 90, 82', 84', 62) arranged such that the displacement of the input element in the first direction causes the displacement of the output element in a third direction, the third direction being opposite the second direction.

2. The transmission device according to the preceding claim, wherein the input element is a ratchet (6), for example a ratchet pivoted about a first axis (A6), and/or wherein the output element is a plate (7), for example a plate pivoted about a first axis (A6), and/or wherein the input element is intended to be integral in rotation with a barrel arbor (4).

3. The transmission device according to one of the preceding claims, wherein the first mechanical connection is arranged such that it permits the free displacement of the input element relative to the output element when the intensity of a mechanical torque exerted by the input element on the output element exceeds a given threshold, and/or wherein the first mechanical connection comprises one or a plurality of arms (71a), for example one or a plurality of arms formed on the output element, and one or a plurality of protrusions (61a), for example one or a plurality of protrusions formed on the input element, the arms and the protrusions interacting by positive engagement.

4. The transmission device according to claim 3, wherein:
- the one or more arms are flexible, and
- the one or more arms and/or the one or more protrusions have one or a plurality of slopes (610, 710), and
- the one or more slopes are arranged such that the one or more flexible arms flex when the intensity of the mechanical torque exerted by the input element on the output element exceeds a given threshold.

5. The transmission device according to one of the preceding claims, wherein the second mechanical connection is arranged such that it permits the free displacement of the output element relative to the input element when the input element has performed a displacement of determined amplitude relative to a frame (9'), for example a rotation of approximately half a turn.

6. The transmission device according to one of the preceding claims, wherein the second mechanical connection comprises:
- a frame (9') comprising a first toothing (91),
- a wheel (9) comprising a second toothing (92) intended to engage with the first toothing,
- an Oldham coupling (90) mechanically connecting the wheel (9) and the output element,
- a cam profile (84'), and
- a finger (62).

7. The transmission device according to one of the preceding claims, wherein the device comprises a return spring (63) in the position of rest of a wheel (9), the position of rest being a position in which a first toothing of the frame (91) and a second toothing of the wheel (9) are not engaged, for example a position in which the wheel (9) is disposed concentrically to the axis (A6), and/or the first direction and the second direction are coincident.

8. A winding mechanism (110) for a watch movement (120), comprising a barrel (2) and a winding train (201, 100), the winding train comprising a transmission device (100) according to one of the preceding claims, the mechanism comprising a source of energy (200), for example an oscillating mass (200).

9. A watch movement (120) comprising a device (100) according to one of claims 1 to 7, and/or a mechanism (110) according to the preceding claim.

10. A timepiece (130), in particular an automatic wristwatch, comprising a device (100) according to one of claims 1 to 7, and/or a mechanism (110) according to claim 8 and/or a watch movement (120) according to the preceding claim.

11. A method of operation of a transmission device according to one of claims 1 to 7 or of a watch mechanism according to claim 8 or of a watch movement according to claim 9 or of a timepiece according to claim 10, comprising at least one iteration of the following steps:
- interaction of the input and output elements (6, 7) via a first mechanical connection (61a, 71a), such that the displacement of the input element in a first direction causes the displacement of the output element in a second direction,
- first disengagement of the input and output elements,
- interaction of the input and output elements via a second mechanical connection (9', 9, 90, 82', 84', 62), such that the displacement of the input element in the first direction causes the displacement of the output element in a third direction, the third direction being opposite the second direction,
- second disengagement of the input and output elements.

12. A method of operation according to the preceding claim, wherein the first disengagement is realized when the intensity of a mechanical torque exerted by the input element on the output element exceeds a given threshold.

13. The method of operation according to claim 11 or 12, wherein the second disengagement is realized when the input element has executed a displacement of determined amplitude relative to a frame in the course of the interaction of the input and output elements via the second mechanical connection, for example approximately half a turn.

14. The method of operation according to one of claims 11 to 13, wherein the first and the second mechanical connections are activated in a mutually exclusive fashion.

15. The method of modification of a timepiece or method of repair of a timepiece, comprising a step involving the removal of a barrel ratchet and a step involving the fitting of a transmission device according to one of claims 1 to 7 in place of the removed barrel ratchet.
